**Europäisches Patentamt**

**European Patent Office**

**Office européen des brevets**

(19)

(11) Veröffentlichungsnummer : **0 111 026**
**B1**

(12) **EUROPÄISCHE PATENTSCHRIFT**

(45) Veröffentlichungstag der Patentschrift :
05.03.86

(21) Anmeldenummer : 82111504.5

(22) Anmeldetag : 11.12.82

(51) Int. Cl.⁴ : **H 04 N  1/46**

(54) Verfahren und Einrichtung zur kopierenden Retusche bei der elektronischen Farbbildreproduktion.

(43) Veröffentlichungstag der Anmeldung :
20.06.84 Patentblatt 84/25

(45) Bekanntmachung des Hinweises auf die Patenterteilung : 05.03.86 Patentblatt 86/10

(84) Benannte Vertragsstaaten :
AT BE CH DE FR GB IT LI NL SE

(56) Entgegenhaltungen :
EP-A- 0 060 312
WO-A-82 /009 02
GB-A- 1 522 514

(73) Patentinhaber : DR.-ING. RUDOLF HELL GmbH
Grenzstrasse 1-5
D-2300 Kiel 14 (DE)

(72) Erfinder : Klie, Jürgen
Schulkoppel 12
D-2301 Tökendorf (DE)
Erfinder : Nehl, Rainer
Gerhardstrasse 77
D-2300 Kiel (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

### Technisches Gebiet

Die Erfindung bezieht sich auf die elektronische Reproduktionstechnik, insbesondere auf die Herstellung von korrigierten und retuschierten Farbauszügen mittels einer elektronischen Bildverarbeitungsanlage (Retuscheplatz).

### Stand der Technik

Bei der elektronischen Reproduktion werden in einem Farb-Scanner durch bildpunkt- und zeilenweise, optoelektronische Abtastung einer Vorlage drei primäre Farbmeßwertsignale gewonnen, welche die Farbanteile Rot, Grün und Blau der abgetasteten Bildpunkte darstellen. Ein Farbkorrektur-Rechner korrigiert die Farbmeßwertsignale und erzeugt daraus die zur Herstellung der Farbauszüge erforderlichen Farbauszugssignale, welche ein Maß für die im späteren Druck erforderlichen Druckfarbmengen sind. Die Farbauszugssignale werden digitalisiert und als digitale Farbwerte bildpunktweise in einem Speichermedium abgelegt.

In einer Bildverarbeitungsanlage können die gespeicherten Farbwerte verschiedener Einzelvorlagen nach einem Layout-Plan zu der Datenmenge einer Gesamtseite vereinigt und/oder zur Durchführung einer nachträglichen, partiellen Retusche geändert werden.

Zur Aufzeichnung der Farbauszüge werden die geänderten Farbwerte aus dem Speichermedium ausgelesen, in analoge Farbauszugssignale zurückgewandelt und einem Recorder zugeführt, in dem die gerasterten oder ungerasterten Farbauszüge « Magenta », « Cyan », « Gelb » und « Schwarz » für die Herstellung der Druckformen belichtet werden.

In der DE-OS 2 920 058 bzw. der korrespondierenden internationalen Patentanmeldung PCT/DE-80/00070 (internationale Veröffentlichungs-Nr. WO 80/02607) wird bereits ein Verfahren zur partiellen elektronischen Retusche angegeben, bei dem die digitalen Farbwerte unter Sichtkontrolle auf einem Farbmonitor bildpunktweise und partiell entsprechend den gewünschten Retusche-Effekten im Farbbild oder im Farbauszug geändert werden. Die Bildpunkt-Koordinaten der zu retuschierenden Farbwerte und die gewünschte Retuschestärke werden mit Hilfe des Koordinatenstiftes eines Koordinaten-Erfassungsgerätes bestimmt, indem der Retuscheur den Koordinatenstift wie einen Retuschepinsel über den zu retuschierenden Bildteil führt.

Bei der Reproduktion kann es vorkommen, daß bereits das Original-Farbbild stellenweise beschädigt ist oder während des Reproduktionsprozesses beschädigt wird. Dann muß der Retuscheur versuchen, den beschädigten Bildbereich des Farbbildes durch Retusche zu regenerieren. Eine solche Retusche gelingt mit der konventionellen Pinselretusche und mit dem bekannten elektronischen Retuscheverfahren nur sehr unvollkommen, insbesondere dann, wenn der beschädigte Bildteil einen großen Detailreichtum wie z. B. ein Fischgräten-Muster aufweist.

### Offenbarung der Erfindung

Der im Anspruch 1 angegebenen Erfindung liegt daher die Aufgabe zugrunde, ein Verfahren und eine Einrichtung zur kopierenden Retusche anzugeben, mit denen Informationen beliebiger Bildbereiche auf andere beliebige Bildbereiche bildpunktgenau übertragen werden.

### Kurze Beschreibung der Erfindung

Die Erfindung wird im folgenden anhand der Figuren 1 bis 4 näher erläutert.

Es zeigen :

Figur 1 eine Einrichtung zur Durchführung einer kopierenden Retusche bei der Farbbildreproduktion ;

Figur 2 verschiedene Formen von Pinselflächen ;

Figur 3 eine grafische Darstellung zur Koordinatenerfassung ;

Figur 4 ein Ausführungsbeispiel für einen Koordinaten-Rechner.

### Bester Weg zur Ausführung der Erfindung

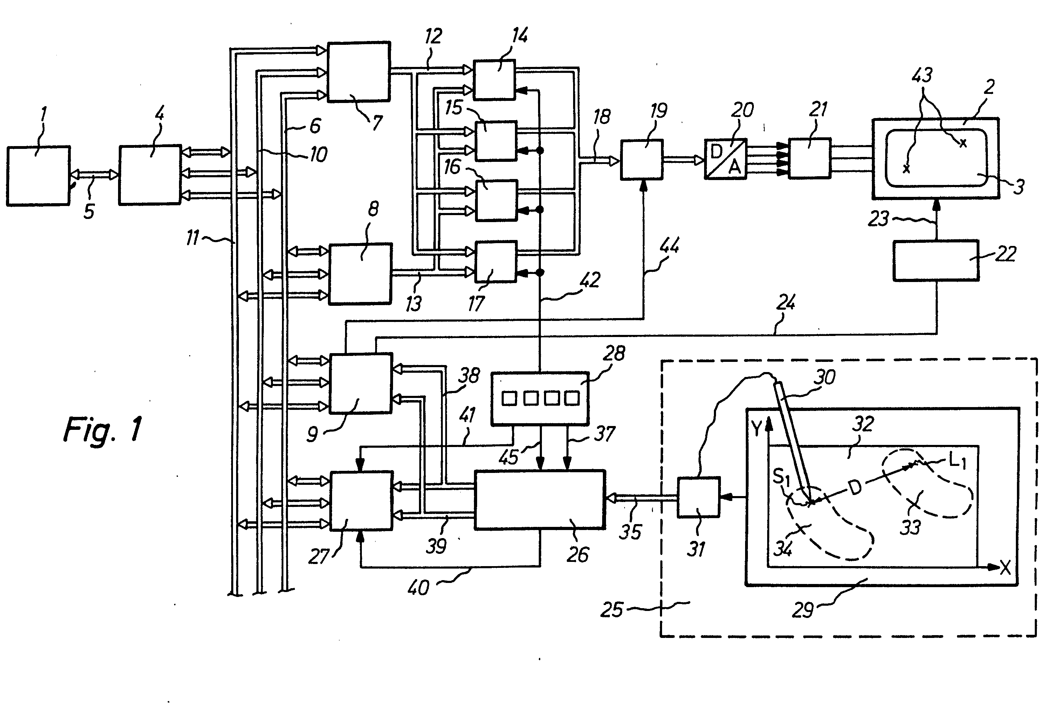

Figur 1 zeigt den prinzipiellen Aufbau einer Einrichtung zur Durchführung einer kopierenden Retusche bei der Farbbildreproduktion. Eine derartige Einrichtung wird üblicherweise als Retuscheplatz bezeichnet.

In einem Speichermedium 1 (Magnetplatte, Magnetband, usw.) des Retuscheplatzes sind im gewählten Ausführungsbeispiel farbkorrigierte digitale Farbwerte Y, M, C und K für die Farbauszüge « Gelb » (Y), « Magenta » (M), « Cyan » (C) und « Schwarz » (K) eines zu reproduzierenden Farbbildes abgespeichert. Die Farbwerte Y, M, C und K, nachfolgend mit F bezeichnet, mögen beispielsweise eine Wortlänge von 8 Bit haben, so daß außer « Schwarz » (0) und « Weiß » (255) noch 254 Graustufen unterschieden werden können.

Das zu retuschierende Farbbild kann sowohl ein Einzelbild als auch eine montierte Druckseite sein. Die Farbwerte eines Einzelbildes wurdes zuvor in einem Farb-Scanner durch punkt- und zeilenweise trichomatische Abtastung einer Vorlage, durch Farbkorrektur und Analog-Digital-Wandlung der Farbauszugssignale gewonnen. Die Farbwerte einer ganzen Druckseite entstanden z. B. in einer Einrichtung zur elektronischen Seitenmontage nach der DE-OS 2 161 038 durch Kombination der korrigierten Einzelbild-Farbwerte nach einem Layout-Plan. In dem Speichermedium 1 können aber auch unkorrigierte Farbwerte F oder bereits nach der DE-OS 2 920 058 retuschierte Farbwerte F abgelegt sein.

Der Retuscheplatz verfügt über einen Farbmonitor 2, auf dessen Bildschirm 3 das Farbbild oder ein Farbauszug beispielsweise aus 512 × 512 Bildpunkten zur Sichtkontrolle bei der Retusche dargestellt wird. Die zur Darstellung auf dem Farbmonitor 2 benötigten Farbwerte F werden vor Retuschebeginn mittels eines Prozeßrechners 4 aus dem gesamten Datenbestand des Speichermediums 1 ausgewählt oder berechnet und vom Speichermedium 1 Bildpunkt für Bildpunkt über Daten-Busse 5 und 6 gleichzeitig in einen Original-Speicher 7 und einen Kopier-Speicher 8 übertragen, so daß die Speicherinhalte bei Retuschebeginn identisch sind. Der Original-Speicher 7 und der Kopier-Speicher 8 sind in Form von Bildwiederholspeichern zur Erzeugung eines Standbildes auf dem Bildschirm 3 des Farbmonitors 2 aufgebaut und weisen entsprechend der zur Darstellung des Bildes benötigten Anzahl von Farbwerten F und deren Wortlänge jeweils eine Kapazität von 512 × 512 Speicherplätzen à 8 Bit pro Farbauszug auf. Jeder abgelegte Farbwert F eines Bildpunktes ist in den Speichern durch die zugehörigen Ortskoordinaten-Paare x und y adressierbar. Anstelle der zwei Bildwiederholspeicher kann auch ein einzelner Bildwiederholspeicher verwendet werden.

Ein Speichersteuerwerk 9 ruft über einen Adreß-Bus 10 wahlweise die Adressen des Original-Speichers 7 und/oder des Kopier-Speichers 8 zyklisch auf. Die gespeicherten Farbwerte F werden mit einem im Speichersteuerwerk 9 erzeugten Lesetakt auf einem Steuerungs-Bus 11 Zeile für Zeile und innerhalb jeder Zeile Bildpunkt für Bildpunkt über Daten-Busse 12 und 13 ausgelesen und Multiplexern 14, 15, 16 und 17 zugeführt. Von den Multiplexern 14, 15, 16 und 17 gelangen die Farbwerte F über einen gemeinsamen Daten-Bus 18 an einen Lichtmarken-Generator 19 und von dort an einen D/A-Wandler 20, welcher die digitalen Farbwerte F in vier analoge Farbauszugssignale umwandelt. Ein nachgeschalteter Drucknachbildungs-Rechner 21 erzeugt aus den analogen Farbauszugssignalen drei Ansteuersignale r, g und b für den Farbmonitor 2, wobei der Drucknachbildungs-Rechner 21 dafür sorgt, daß das dargestellte Bild bereits den farblichen Eindruck eines echten Mehrfarbendrucks vermittelt. Ein derartiger Drucknachbildungs-Rechner ist z. B. ausführlich in der DE-OS 2 607 623 beschrieben.

Die Aufzeichnung auf dem Bildschirm 3 des Farbmonitors 2 erfolgt nach dem Zeilensprung-Verfahren, um ein flimmerfreies Bild zu erhalten. Ein Taktgenerator 22 erzeugt nach der beim Fernsehen üblichen Technik die zur Bildaufzeichnung benötigten Horizontal- und Vertikal-Ablenksignale sowie die Zeilenstart- und Bildstart-Impulse auf einer Mehrfach-Leitung 23. Das Speichersteuerwerk 9 liefert über eine weitere Mehrfach-Leitung 24 Horizontal- und Vertikal-Synchronimpulse an den Taktgenerator 22, so daß die punktweise Bildaufzeichnung auf dem Bildschirm 3 des Farbmonitors 2 mit dem Lesen der Farbwerte F aus dem Original-Speicher 7 bzw. aus dem Kopier-Speicher 8 synchronisiert ist.

Der Retuscheplatz besteht weiterhin aus einer Koordinaten-Erfassungseinrichtung 25 zur Markierung der Ortskoordinaten-Paare x und y, einem nachgeschalteten Koordinaten-Rechner 26, einer Rechenschaltung 27 für die Farbwerte F sowie einer Eingabe-Stufe 28 mit einer Tastatur zur Anwahl von bestimmten Funktionen. Aufbau und Wirkungsweise dieser Komponenten werden im Zusammenhang mit der nachfolgenden Erläuterung der Kopierretusche beschrieben.

Mit der Kopierretusche wird erfindungsgemäß ein Muster oder eine Struktur aus einem beliebigen Bildbereich, nachfolgend Lese-Bereich genannt, entnommen und bildpunktgenau auf einen anderen nach Form und Größe frei wählbaren Bildbereich, nachfolgend Schreib-Bereich genannt, übertragen oder kopiert. Dabei kann der Schreib-Bereich entweder ein beschädigter Bildteil, in dem Muster oder Strukturen restauriert werden müssen oder aber ein Bildteil sein, in den im Original nur einmal vorhandene Muster oder Strukturen übertragen werden sollen. Die Kopierretusche kann im Farbbild, d. h. in allen Farbauszügen oder aber in ausgewählten Farbauszügen, erfolgen.

Zur Durchführung der Kopierretusche werden die Farbwerte $F_L$ des gewünschten Lese-Bereiches aus dem Original-Speicher 7 entnommen und in der Rechenschaltung 27 in modifizierte Farbwerte $F^*_S$ umgeformt. Anschließend werden im Kopier-Speicher 8 die entsprechenden Farbwerte $F_S$ des gewünschten Schreib-Bereiches durch die modifizierten Farbwerte $F^*_S$ bildpunktgenau ersetzt.

In einem ersten Verfahrensschritt werden der gewünschte Schreib-Bereich und Lese-Bereich grob definiert, indem der Retuscheur mit Hilfe der Koordinaten-Erfassungseinrichtung 25 innerhalb der Bereiche einen Schreibpunkt $S_l$ und einen Lesepunkt $L_l$ markiert und deren koordinatenmäßiger Abstand festgestellt wird.

Die Koordinaten-Erfassungseinrichtung 25 besteht aus einem Digitalisiertablett 29, aus einer Markiervorrichtung, z. B. in Form eines Koordinatenstiftes 30, und aus einer Meßstufe 31.

Zur Erläuterung der Koordinatenerfassung möge einmal angenommen werden, daß sich das zu retuschierende Farbbild 32 auf dem Digitalisiertablett 29 befindet und nicht nur wie bei der tatsächlichen Betriebsweise des Retuscheplatzes immateriell auf dem Bildschirm 3 des Farbmonitors 2 dargestellt wird. Ein ausgewählter Lese-Bereich 33, in dem ein Muster besonders gut wiedergegeben ist, und ein entsprechender Schreib-Bereich 34, in den das Muster übertragen werden soll, sind durch gestrichelte Linien angedeutet. Die ausgewählten Bereiche 33 und 34 werden grob definiert, indem der Retuscheur innerhalb des Lese-Bereiches 33 den Lesepunkt $L_l$ und innerhalb des Schreib-Bereiches 34 den Schreibpunkt $S_l$ markiert. Lesepunkt $L_l$ und Schreibpunkt $S_l$ haben den Abstand « D » zueinander. Die von der Meßstufe 31 ausgegebenen Lesepunkt-Koordinaten $x_{L1}$ und $y_{L1}$ sowie die Schreibpunkt-Koordinaten $x_{S1}$ und $y_{S1}$ werden über einen Bus 35 in den Koordinaten-Rechner 26 transferiert und dort jeweils auf einen Befehl « Speichern » abgelegt. Der Befehl « Speichern » wird vom Retuscheur durch Betätigen einer Taste in der Eingabe-Stufe 28 über eine Leitung 37 an den Koordinaten-Rechner 26 gegeben. In dem Koordinaten-Rechner 26 wird der Abstand « D » zwischen dem markierten Lesepunkt $L_1$ und dem Schreibpunkt $S_1$ bzw. die Koordinaten-Differenzwerte $x_D$ und $y_D$ gemäß Gleichungen (1) berechnet.

$$\begin{array}{ll} x_D = x_{L1} - x_{S1} & \\ D = \sqrt{x^2_D + y^2_D} & \quad (1) \\ y_D = y_{L1} - y_{S1} & \end{array}$$

Die berechneten Koordinaten-Differenzwerte $x_D$ und $y_D$ werden ebenfalls in dem Koordinaten-Rechner 26 gespeichert, womit der Abstand « D » fixiert ist.

In einem zweiten Verfahrensschritt markiert der Retuscheur den gewünschten Schreib-Bereich 34 nach Form und Größe, indem er den Koordinatenstift 30 wie einen Retuschepinsel in dicht nebeneinander liegenden Linien über die entsprechende Fläche führt, wobei erfindungsgemäß auch gleichzeitig der entsprechende Lese-Bereich 33 markiert wird.

Die bei der Überstreichung der Schreibpunkte S des Schreib-Bereiches 34 markierten Schreibpunkt-Koordinaten $x_S$ und $y_S$ gelangen über den Koordinaten-Rechner 26 und einen Adreß-Bus 38 direkt an die Rechenschaltung 27 sowie als Schreibadressen für den Kopier-Speicher 8 an das Speichersteuerwerk 9.

Gleichzeitig werden im Koordinaten-Rechner 26 laufend die Lesepunkt-Koordinaten $x_L$ und $y_L$ derjenigen Lesepunkte L berechnet, die zu den mittels des Koordinatenstiftes 30 überstrichenen Schreibpunkten S den Abstand « D » haben, indem gemäß Gleichung (2) zu den ermittelten Schreibpunkt-Koordinaten $x_S$ und $y_S$ die gespeicherten Koordinaten-Differenzwerte $x_D$ und $y_D$ hinzuaddiert werden.

$$\begin{array}{ll} x_L = x_S + x_D & \\ y_L = y_S + y_D & \quad (2) \end{array}$$

Auf diese Weise wird gewissermaßen ein zweiter Koordinatenstift simuliert, welcher sich im festen Abstand « D » zum Koordinatenstift 30 und synchron dazu bewegt und eine Fläche als Lese-Bereich 33 überstreicht, welche bei der beschriebenen Betriebsweise nach Form und Größe dem Schreib-Bereich 34 entspricht. Mit Hilfe dieses Doppel-Koordinatenstiftes, der gleichzeitig zwei sich im Abstand « D » zueinander befindliche Bildpunkte markiert, wird in vorteilhafter Weise die bildpunktgenaue Übertragung oder Kopie von Mustern und Strukturen erreicht.

Die von dem Koordinaten-Rechner 26 ausgegebenen Lesepunkt-Koordinaten $x_L$ und $y_L$ gelangen über einen Adreß-Bus 39 ebenfalls an die Rechenschaltung 27 sowie als Lese-Adressen für den Original-Speicher 7 an das Speichersteuerwerk 9.

In dem Koordinaten-Rechner 26 wird außerdem immer dann ein Befehl « Koordinatenwechsel » erzeugt, wenn der Koordinatenstift 30 eine Verschiebung um einen Bildpunkt ausführt. Der Befehl « Koordinatenwechsel » wird über eine Steuerleitung 40 an die Rechenschaltung 27 übermittelt.

Jeweils bei einem Befehl « Koordinatenwechsel » ruft die Rechenschaltung 27 über den Adreß-Bus 10 die Lese-Adressen $x_L$ und $y_L$ im Original-Speicher 7 auf, unter denen die zu entnehmenden Farbwerte $F_L$ des Lese-Bereiches 33 abgelegt sind, sowie die zugehörigen Schreib-Adressen $x_S$ und $y_S$ im Kopier-Speicher 8, unter denen die zu ersetzenden Farbwerte $F_S$ des Schreib-Bereiches 34 gespeichert sind.

Der Retuscheur bestimmt durch Betätigen entsprechender Tasten in der Eingabe-Stufe 28, aus welchen Farbauszügen Farbwerte $F_L$ entnommen und in welchen Farbauszügen Farbwerte $F_S$ ersetzt werden sollen, sowie die Art der Farbwertänderung. Entsprechende Befehle « Farbauszugs-Auswahl » gelangen von der Eingabe-Stufe 28 über eine Steuerleitung 41 an die Rechenschaltung 27. Dabei hat der Retuscheur freie Wahl. Die Farbwerte $F_L$ eines Farbauszuges oder einer beliebigen Kombination von Farbauszügen können in denselben, einen anderen Farbauszug oder in eine andere beliebige Kombination von Farbauszügen übertragen werden.

Die im Original-Speicher 7 und im Kopier-Speicher 8 aufgerufenen Farbwerte $F_L$ und $F_S$ werden über den Daten-Bus 6 in die Rechenschaltung 27 transferiert. In der Rechenschaltung 27 werden aus den Farbwerten $F_L$ und gegebenenfalls auch aus den Farbwerten $F_S$ die Substitutionswerte $F^*_S$ berechnet, welche dann über den Daten-Bus 6 in den adressierten Schreib-Bereich des Kopier-Speichers 8 überschrieben werden, womit die dort ursprünglich vorhandenen Farbwerte gelöscht sind, während die Farbwerte des Kopier-Speichers 7 erhalten bleiben.

Bei einer ersten Art der Kopierretusche werden die Substitutionswerte $F^*_S$ für die Schreibpunkte S gemäß Gleichung (3) anteilmäßig aus den Farbwerten $F_L$ der zugehörigen Lesepunkte L berechnet, wobei der Anteilfaktor « a » auch a = 1 sein kann.

$$F^*_S = a \, F_L \qquad (3)$$

Für den Fall, daß die Kopierretusche im Farbbild, d. h. in allen Farbauszügen, erfolgt, ergeben sich für die einzelnen Farbauszüge folgende Beziehungen :

$$\begin{array}{ll} Y^*_S = a_Y \, Y_L & \\ M^*_S = a_M \, M_L & \\ C^*_S = a_C \, C_L & \quad (4) \\ K^*_S = a_K \, K_L & \end{array}$$

Im Falle, daß die Koppierretusche in einem einzigen Farbauszug, z. B. im Farbauszug « Gelb », durchgeführt werden soll, ist :

$$Y^*_S = a_Y \, Y_L \qquad (5)$$

und im Falle, daß die Koppierretusche von einem Farbauszug auf einen anderen Farbauszug erfolgen soll, z. B. bei der Übertragung eines Schattens vom Farbauszug « Magenta » auf den Farbauszug « Schwarz », ist :

$$K^*_S = a_M \, M_L \qquad (6)$$

Bei einer anderen Art der Kopierretusche werden die neuen Substitutionswerte $F^*_S$ für die Schreibpunkte S gemäß Gleichung (7) durch eine gewichtete Addition der ursprünglichen Farbwerte $F_S$ der Schreibpunkte S und der Farbwerte $F_L$ der zugehörigen Lesepunkte L berechnet, wobei diese Art der Kopierretusche ebenfalls im Farbbild oder in einem der Auszüge erfolgen kann.

$$F^*_S = a \, F_S + b \, F_L \qquad (7)$$

Mit dieser Art der Kopierretusche können z. B. Geisterbilder erzeugt werden. Die Kopierretusche ist nicht auf die beschriebenen Arten beschränkt.

Zur Beurteilung der erfolgten Kopierretusche kann auch das Original-Farbbild zum Vergleich mit dem retuschierten Farbbild auf dem Bildschirm 3 des Farbmonitors 2 dargestellt werden. Dazu läßt sich wahlweise der Original-Speicher 7 oder der Kopier-Speicher 8 mit Hilfe der Multiplexer 14 bis 17 zu dem Farbmonitor 2 durchschalten. Der Retuscheur betätigt eine entsprechende Taste in der Eingabe-Stufe 28, wodurch ein Befehl « Bildumschaltung » von der Eingabe-Stufe 28 über eine weitere Steuerleitung 42 an die Multiplexer 14 bis 17 gegeben wird.

Die Kopierretusche kann partiell rückgängig gemacht werden, indem der Retuscheur den gewünschten partiellen Bildbereich mit dem Koordinatenstift 30 überstreicht und die unveränderten Farbwerte $F_L$ des adressierten Speicherbereiches des Original-Speichers 7 in den adressierten Speicherbereich des Kopier-Speichers 8 überschrieben werden. Die Kopierretusche kann auch vollständig zurückgenommen werden, indem sämtliche Farbwerte $F_L$ des Original-Speichers 7 in den Kopier-Speicher 8 überschrieben werden.

Zur Erläuterung der Koordinatenerfassung war angenommen worden, daß sich auf dem Digitalisiertablett 29 ein Farbbild befindet, das bei der tatsächlichen Betriebsweise des Retuscheplatzes nicht vorhanden ist. In diesem Falle werden zur Sichtbarmachung der auf dem Digitalisiertablett 29 markierten Punkte entsprechende Lichtmarken 43 in den Bildschirm 3 des Farbmonitors 2 eingeblendet, welche sich im Abstand « D » in Synchronismus mit dem Doppel-Koordinatenstift über den Bildschirm bewegen. Dazu werden im Speichersteuerwerk 9 die zur Bilddarstellung zyklisch aufgerufenen Speicheradressen mit den durch die Koordinaten-Erfassungseinrichtung 25 markierten Adressen verglichen und jeweils bei Adressengleichheit entsprechende Befehle « Lichtmarke » von dem Speichersteuerwerk 9 über eine Steuerleitung 44 an den Lichtmarken-Generator 19 gegeben. Die Befehle « Lichtmarke » erscheinen genau in den Zeitpunkten, in denen die Elektronenstrahlen des Farbmonitors 2 die markierten Schreib- und Lesepunkte auf der Bildschirmfläche überstreichen. Die Befehle « Lichtmarke » aktivieren den Lichtmarken-Generator 19, der kurzzeitig gleiche Ansteuersignale für den Farbmonitor 2 erzeugt. Dadurch werden alle drei Elektronen-Erzeugungssysteme des Farbmonitors 2 gleichzeitig mit der maximal möglichen Leuchtdichte eingeschaltet, wodurch die « weißen » Lichtmarken 43 auf dem Bildschirm 3 entstehen. Zur Unterscheidung der beiden Lichtmarken 43 könnte eine der Lichtmarken blinkend dargestellt werden oder eine andere Form aufweisen.

Um größere Teile des Farbbildes schneller überstreichen zu können, lassen sich der schreibseitige und der leseseitige Wirkungsbereich des Doppel-Koordinatenstiftes vergrößern. In diesem Falle markiert der Koordinatenstift 30 selbst jeweils nur den Mittelpunkt des schreibseitigen Wirkungsbereiches, während die Schreib-Koordinaten $x_S$ und $y_S$ der in den schreibseitigen Wirkungsbereich fallenden Schreibpunkte aus den markierten Mittelpunkt-Koordinaten $x_{SM}$ und $y_{SM}$ im Koordinaten-Rechner 26 berechnet werden. Ebenso werden im Koordinaten-Rechner 26 die entsprechenden Lesepunkt-Koordinaten $x_L$ und $y_L$ des leseseitigen Wirkungsbereiches des Doppel-Koordinatenstiftes ermittelt. Größe und Form der Wirkungsbereiche können durch die Anzahl und durch die Lage der gleichzeitig berechneten Koordinaten in bezug auf die markierten Mittelpunkt-Koordinaten bestimmt werden. Von der Eingabe-Stufe 28 aus können über eine Steuerleitung 45 im Koordinaten-Rechner 26 Größe und Form der Wirkungsbereiche vorgegeben werden. Die vergrößerten Wirkungsbereiche werden durch entsprechend vergrößerte Lichtmarken 43 auf dem Bildschirm 3 des Farbmonitors 2 angezeigt.

Durch eine nach Form und Größe unterschiedliche Einstellung der beiden Wirkungsbereiche des Doppel-Kordinatenstiftes läßt sich bei der Kopierretusche in vorteilhafter Weise gleichzeitig eine Maßstabsänderung durchführen, wobei der Maßstabsfaktor durch das Flächenverhältnis der Wirkungsbereiche bestimmt ist. Da bei unterschiedlichen Wirkungsbereichen des Doppel-Koordinatenstiftes jeweils eine unterschiedliche Anzahl von zu entnehmenden Farbwerten $F_L$ im Original-Speicher 7 und von zu ersetzenden Farbwerten $F_S$ im Kopier-Speicher 8 adressiert werden, wird der Substitutionswert $F^*_S$ entweder durch Zusammenfassung oder durch Interpolation von Farbwerten berechnet.

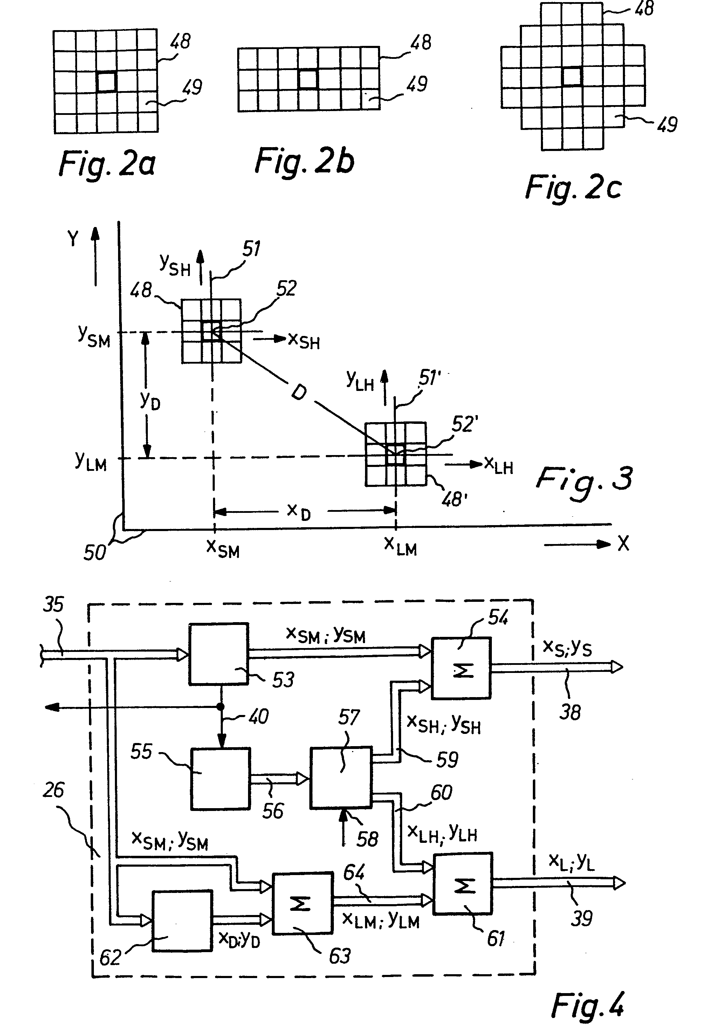

In den Figuren 2a bis 2c sind verschiedene Formen und Größen von Wirkungsbereichen des Doppel-Koordinatenstiftes dargestellt. Figur 2a zeigt einen quadratischen Wirkungsbereich 48, der 5 × 5 Bildpunkte 49 umfaßt, Figur 2b einen rechteckigen Wirkungsbereich 48 mit 3 × 7 Bildpunkten 49 und Figur 2c einen der Kreisform angenäherten Wirkungsbereich 48.

Zur Ermittlung der Schreibpunkt-Koordinaten $x_S$ und $y_S$ sowie der Lesepunkt-Koordinaten $x_L$ und $y_L$ mittels des Doppel-Koordinatenstiftes zeigt Figur 3 eine grafische Darstellung mit einem Ausschnitt aus dem Digitalisiertablett 29 der Koordinaten-Erfassungseinrichtung 25 mit dem schreibseitigen Wirkungsbereich 48 und dem leseseitigen Wirkungsbereich 48' in einer beliebigen Position des Doppel-Koordinatenstiftes.

Innerhalb des X/Y-Koordinatensystems 50 hat der schreibseitige Wirkungsbereich 48 die Mittelpunkt-Koordinaten $x_{SM}$ und $y_{SM}$ und der schreibseitige Wirkungsbereich 48' die Mittelpunkt-Koordinaten $x_{LM}$ und $y_{LM}$. Den Wirkungsbereichen 48 und 48' sind Hilfs-Koordinatensysteme 51 und 51' zugeordnet. Die Hilfs-Koordinatensysteme 51 und 51' verlaufen jeweils durch die Mittelpunkte 52 und 52' der Wirkungsbereiche 48 bzw. 48' und verschieben sich mit der Bewegung des Doppel-Koordinatenstiftes. In den Hilfs-Koordinatensystemen 51 und 51' sind die Hilfskoordinaten $x_{SH}$ und $y_{SH}$ bzw. $x_{LH}$ und $y_{LH}$ derjenigen Bildpunkte festgelegt, die an der Bildung der Wirkungsbereiche 48 bzw. 48' in bezug auf Form und Größe beteiligt sind. Die Mittelpunkte 52 bzw. 52' der Wirkungsbereiche 48 bzw. 48' haben den fixierten Abstand « D » bzw. die koordinatenmäßigen Abstände $x_D$ und $y_D$.

Mittels des Koordinatenstiftes 30 werden die Mittelpunkt-Koordinaten $x_{SM}$ und $y_{SM}$ des schreibseitigen Wirkungsbereiches 48 markiert. Die Schreibpunkt-Koordinaten $x_S$ und $y_S$ für einen der in den schreibseitigen Wirkungsbereich 48 fallenden Schreibpunkte S errechnet sich nach den Gleichungen (8).

$$x_S = x_{SM} + x_{SH}$$
$$y_S = y_{SM} + y_{SH} \qquad (8)$$

Die entsprechenden Lesepunkt-Koordinaten $x_L$ und $y_L$ für einen der in den leseseitigen Wirkungsbereich 48' fallenden Lesepunkt L werden nach den Gleichungen (9) bestimmt, wobei die Mittelpunkt-Koordinaten $X_{LM}$ und $Y_{LM}$ sich aus Gleichungen (2) ergeben.

$$x_L = x_{LM} + x_{LH}$$
$$y_L = y_{LM} + y_{LH} \qquad (9)$$

Figur 4 zeigt ein Ausführungsbeispiel des Koordinaten-Rechners 26 für den Fall, daß der Doppel-Koordinatenstift vergrößerte Wirkungsbereiche aufweist.

Die von der Koordinaten-Erfassungseinrichtung 25 gelieferten Mittelpunkt-Koordinaten $x_{SM}$ und $y_{SM}$ gelangen über den Bus 35 und eine Vergleichsstufe 53 auf eine Addierstufe 54.

In der Vergleichsstufe 53 werden laufend aufeinanderfolgende Paare von Mittelpunkt-Koordinaten $x_{SM}$ und $y_{SM}$ miteinander verglichen, und bei einem Koordinatenwechsel, der bei einer Verschiebung des Koordinatenstiftes 30 auftritt, liefert die Vergleichsstufe 53 den Befehl « Koordinatenwechsel » auf der Leitung 40 an einen Adreßzähler 55. Der Adreßzähler 55, jeweils von dem Befehl « Koordinatenwechsel » gestartet, ruft zyklisch und zeilenweise alle möglichen Koordinatenwerte auf, welche über einen Daten-Bus 56 einer Rechenstufe 57 zugeführt werden. Die Rechenstufe 57 ist über einen Programmiereingang 58 mit den Parametern der gewünschten Wirkungsbereiche 48 bzw. 48' nach einer der Figuren 2a bis 2c programmiert. Die vom Adreßzähler 55 aufgerufenen Koordinatenwerte werden in der Rechenstufe 57 daraufhin untersucht, ob sie in die vorgegebenen Wirkungsbereiche 48 bzw. 48' fallen. Ist dies der Fall, handelt es sich bei den aufgerufenen Koordinatenwerten um die Hilfskoordinaten $x_{SH}$ und $y_{SH}$ bzw. $x_{LH}$ und $y_{LH}$ der Wirkungsbereiche 48 und 48'. Die entsprechenden Hilfskoordinaten $X_{SH}$ und $Y_{SH}$ des schreibseitigen Wirkungsbereiches 48 werden über einen Daten-Bus 59 an die Addierstufe 54 gegeben, in der gemäß den Gleichungen (8) die Schreibpunkt-Koordinaten $x_S$ und $y_S$ auf dem Adreß-Bus 38 gebildet werden. Die entsprechenden Hilfskoordinaten $X_{LH}$ und $Y_{LH}$ des leseseitigen Wirkungsbereiches 48' gelangen über einen Daten-Bus 60 auf eine weitere Addierstufe 61. In einem Abstands-Rechner 62 sind die Koordinaten-Differenzwerte $x_D$ und $y_D$ zuvor nach den Gleichungen (1) berechnet und dort abgelegt worden. Aus den Mittelpunkt-Koordinaten $x_{SM}$ und $y_{SM}$ des schreibseitigen Wirkungsbereiches 48 und den gespeicherten Koordinaten-Differenzwerten $x_D$ und $y_D$ werden in einer Addierstufe 63 die Mittelpunkt-Koordinaten $x_{LM}$ und $y_{LM}$ gemäß den Gleichungen (2) berechnet und über einen Daten-Bus 64 der Addierstufe 61 zugeführt, in der gemäß den Gleichungen (9) die laufenden Lesepunkt-Koordinaten $x_L$ und $y_L$ auf dem Adreß-Bus 39 erzeugt werden.

## Patentansprüche

1. Verfahren zur kopierenden Retusche bei der elektronischen Reproduktion von Farbbildern, in dem die durch bildpunktweise trichromatische Vorlagen-Abtastung gewonnenen Farbsignale digitalisiert und die digitalen Farbwerte der einzelnen Farbkomponenten in einem Speichermedium bildpunktweise abgelegt werden und in dem Bildpunkt-Koordinaten mittels der Markiervorrichtung (30) eines Koordinaten-Erfassungsgerätes (25), insbesondere mittels eines Koordinatenstiftes, erfaßt werden, welche die zugehörigen Farbwerte im Speichermedium adressieren, dadurch gekennzeichnet, daß

a) innerhalb eines ersten Bildbereiches (33) des Farbbildes, aus dem eine Bildinformation entnommen werden soll, ein erster Bildpunkt ($L_1$) (Lesepunkt) und innerhalb eines zweiten Bildbereiches (34), in den die Bildinformation hineinkopiert werden soll, ein zweiter Bildpunkt ($S_1$) (Schreibpunkt) markiert und deren Bildpunkt-Koordinaten (x ; y) mittels der Markiervorrichtung (30) erfaßt werden,

b) aus den erfaßten Bildpunkt-Koordinaten (x ; y) der Abstand (D) zwischen Lesepunkt ($L_1$) und Schreibpunkt ($S_1$) ermittelt und fixiert wird,

c) bei der Erfassung der Bildpunkt-Koordinaten (x ; y) der innerhalb eines der Bildbereiche liegenden Bildpunkte mittels der Markiervorrichtung (30) gleichzeitig die Bildpunkt-Koordinaten (x ; y) derjenigen ortsmäßig zugeordneten Bildpunkte innerhalb des anderen Bildbereiches ermittelt werden, welche zu den jeweils erfaßten Bildpunkten den fixierten Abstand (D) zwischen Lesepunkt ($L_1$) und Schreibpunkt ($S_1$) aufweisen,

d) zu jedem erfaßten Bildpunkt des zweiten Bildbereiches (34) mindestens für einen der Farbkomponenten ein Substitutionswert aus den Farbwerten der ortsmäßig zugehörigen Bildpunkte des ersten Bildbereiches (33) ermittelt wird und

e) die Farbwerte der betreffenden Farbkomponenten der erfaßten Bildpunkte zum bildpunktgenauen Kopieren von Bildinformationen durch die bildpunktmäßig zugehörigen Substitutionswerte ersetzt werden.

2. Verfahren nach Anspruch 1, dadurch gekennzeichnet, daß die Substitutionswerte für eine Farbkomponente aus den entsprechenden Farbwerten derselben Farbkomponente ermittelt werden.

3. Verfahren nach Anspruch 1, dadurch gekennzeichnet, daß die Substitutionswerte für eine Farbkomponente aus den entsprechenden Farbwerten einer anderen Farbkomponente ermittelt werden.

4. Verfahren nach Anspruch 1, dadurch gekennzeichnet, daß die Substitutionswerte zusätzlich aus den ursprünglichen Farbwerten der erfaßten Bildpunkte ermittelt werden.

5. Verfahren nach Anspruch 1 und 4, dadurch gekennzeichnet, daß die Substitutionswerte durch eine gewichtete Addition der entsprechenden Farbwerte ermittelt werden.

6. Verfahren nach einem der Ansprüche 1-5, dadurch gekennzeichnet, daß

a) das Farbbild zur Sichtkontrolle auf dem Bildschirm (3) eines Farbmonitors (2) dargestellt wird,

b) in den Bildschirm (3) zwei Lichtmarken (43) mit dem fixierten Abstand (D) eingeblendet werden und

c) die Bewegung der Lichtmarken (43) mit der Bewegung der Markiervorrichtung synchronisiert ist.

7. Verfahren nach Anspruch 6, dadurch gekennzeichnet, daß die beiden Lichtmarken (43) unterscheidbar sind.

8. Verfahren nach einem der Ansprüche 1-7, dadurch gekennzeichnet, daß

a) die Farbwerte in mindestens einem Bildwiederholspeicher (7 ; 8) abgelegt sind und

b) zur Darstellung des Farbbildes auf dem Bildschirm (3) des Farbmonitors (2) zyklisch aus dem Bildwiederholspeicher ausgelesen werden.

9. Verfahren nach einem der Ansprüche 1-8, dadurch gekennzeichnet, daß

a) die Farbwerte des zu retuschierenden Farbbildes gleichzeitig in einen ersten Bildwiederholspeicher (7) und einen zweiten Bildwiederholspeicher (8) abgelegt werden,

b) nur die Farbwerte des zweiten Bildwiederholspeichers (8) durch die entsprechenden Substitutionswerte ersetzt werden und

c) zur Darstellung des Originalfarbbildes oder des retuschierten Farbbildes wahlweise die Farbwerte des ersten Bildwiederholspeichers (7) oder des zweiten Bildwiederholspeichers (8) zum Farbmonitor (2) durchgeschaltet werden.

10. Verfahren nach einem der Ansprüche 1-9, dadurch gekennzeichnet, daß die Kopierretusche rückgängig gemacht wird, indem die Substitutionswerte wieder durch die ursprünglichen Farbwerte ersetzt werden.

11. Verfahren nach einem der Ansprüche 1-10, dadurch gekennzeichnet, daß die Anzahl der gleichzeitig markierten Bildpunkte innerhalb der beiden Bildbereiche (33 ; 34) vergrößert wird, indem

a) jeweils gleichzeitig die Bildpunkt-Koordinaten (x ; y) von mehreren um den mittels der Markiervorrichtung erfaßten Bildpunkt liegenden Bildpunkten innerhalb des einen Bildbereiches festgestellt werden (erster Wirkungsbereich) und

b) jeweils gleichzeitig auch die Bildpunkt-Koordinaten (x ; y) der abstandsmäßig zugeordneten Bildpunkte des anderen Bildbereiches ermittelt werden (zweiter Wirkungsbereich).

12. Verfahren nach Anspruch 11, dadurch gekennzeichnet, daß durch Auswahl der gleichzeitig ermittelten Bildpunkt-Koordinaten (x ; y) Form und Größe der Wirkungsbereiche (48 ; 48') festgelegt werden.

13. Verfahren nach Anspruch 11 oder 12, dadurch gekennzeichnet, daß die Wirkungsbereiche (48 ; 48') durch vergrößerte Lichtmarken (43) angezeigt werden.

14. Verfahren nach einem der Ansprüche 1-13, dadurch gekennzeichnet, daß bei der kopierenden Retusche gleichzeitig eine Maßstabsänderung durch unterschiedlich große Wirkungsbereiche (48 ; 48') durchgeführt wird.

15. Einrichtung zur Durchführung des Verfahrens nach Anspruch 1, bestehend aus einem Speichermedium für Farbwerte, einem Farbmonitor zur Darstellung des Farbbildes und aus einer Koordinaten-Erfassungseinrichtung (25) mit einer Markiervorrichtung (30) zur Erfassung von Bildpunkt-Koordinaten, gekennzeichnet durch

a) einen Original-Speicher (7) für die unretuschierten Farbwerte,

b) einen Kopier-Speicher (8) für die retuschierten Farbwerte,

c) ein Speichersteuerwerk (9) zum Aufrufen der 30 Speicheradressen, welches mit dem Original-Speicher (7) und dem Kopier-Speicher (8) verbunden ist,

d) eine Rechenschaltung (27) zur Bildung der Substitutionswerte, welche an den Original-Speicher (7), den Kopierspeicher (8) und das Speichersteuerwerk (9) angeschlossen ist, und durch

e) einen Koordinaten-Rechner (26) zur Ermittlung der Bildpunkt-Koordinaten (x ; y) der beiden Bildbereiche aus den mittels der Markiervorrichtung (30) erfaßten Bildpunkt-Koordinaten, welcher mit dem Speichersteuerwerk (9), der Rechenschaltung (27) und der Koordinaten-Erfassungseinrichtung (25) in Verbindung steht.

16. Einrichtung nach Anspruch 15, dadurch gekennzeichnet, daß Multiplexer (14 ; 15 ; 16 ; 17) vorgesehen sind, durch welche der Original-Speicher (7) und der Kopier-Speicher (8) wahlweise mit dem Farbmonitor (2) verbindbar sind.

17. Einrichtung nach Anspruch 15 oder 16, dadurch gekennzeichnet, daß der Koordinaten-Rechner (26) folgende Baugruppen aufweist :

a) eine mit den erfaßten Bildpunkt-Koordinaten (x ; y) beaufschlagte Vergleichsstufe (53),

b) einen von der Vergleichsstufe (53) gesteuerten Adreßzähler (55) zum zyklischen Aufrufen von Koordinatenwerten,

c) eine an den Adreßzähler (55) angeschlossene Rechenstufe (57) zum Aufrufen von Hilfskoordinaten ($x_H$ ; $y_H$)

d) eine erste Addierstufe (54) zur Bildung der Bildpunkt Koordinaten ($x_S$ ; $y_S$) des einen Bildbereiches, welche an die Vergleichsstufe (53) und die Rechenstufe (57) angeschlossen ist,

e) einen mit den erfaßten Bildpunkt-Koordinaten des Lesepunktes und des Schreibpunktes beaufschlagten Abstands-Rechner (62) zur Ermittlung und Speicherung des Abstandes (D) zwischen Lesepunkt und Schreibpunkt,

f) eine zweite Addierstufe (63), welche mit den erfaßten Bildpunkt-Koordinaten und den Abstands-Koordinaten ($x_D$, $y_D$) beaufschlagt ist und

g) eine dritte Addierstufe (61) zur Bildung der Bildpunkt-Koordinaten ($x_L$, $y_L$) des anderen Bildbereiches, welche mit der Rechenstufe (57) und der zweiten Addierstufe (63) in Verbindung steht.

**Claims**

1. Process for copying retouching during electronic reproduction of colour images, in which the colour signals obtained by image-dot-wise trichromatic original scanning are digitalized and the digital colour values of the individual colour components are stored image dot by image dot in a storage medium and wherein image dot co-ordinates are registered by means of the marker device (30) of a co-ordinate detection device, in particular by means of a co-ordinate stylus, which address the corresponding colour values in the storage medium, characterized in that

a) a first image dot ($L_1$) (read dot) is marked within a first image section (33) of the colour image from which an image information is to be drawn, and a second image dot ($S_1$) (write dot) is marked within a second image section (34) into which the image information is to be copied, and that their image dot co-ordinates (x ; y) are registered by means of the marker device (30),

b) the distance (D) between the read dot ($L_1$) and the write dot ($S_1$) is determined from the registered image dot co-ordinates (x ; y) and registered,

c) the image dot co-ordinates (x ; y) of the positionally co-ordinated image dots within one of the image sections which have the registered distance (D) between the read dot ($L_1$) and the write dot ($S_1$) from the image dots registered in each case, are determined simultaneously during the registration of the image dot co-ordinates (x ; y) of the image dots situated within the other image section by means of the marker device (30),

d) a substitution value for at least one of the colour components is determined in respect of each registered image dot of the second image section (34) from the colour values of the positionally corresponding image dots of the first image section (33), and

e) the colour values of the colour components in question of the registered image dots are replaced by the substitution values corresponding thereto image dot for image dot, for copying image information with image dot for image dot precision.

2. Process according to claim 1, characterized in that the substitution values for one colour component are determined from the corresponding colour values of the same colour component.

3. Process according to claim 1, characterized in that the substitution values for one colour component are determined from the corresponding colour values of another colour component.

4. Process according to claim 1, characterized in that the substitution values are complimentarily determined from the original colour values of the registered image dots.

5. Process according to claims 1 and 4, characterized in that the substitution values are determined by a weighted addition of the corresponding colour values.

6. Process according to one of the claims 1 to 5, characterized in that

a) the colour image is displayed for visual inspection on the image screen (3) of a colour monitor (2),

b) two light marks (43) having the fixed spacing (D) are gated into the image screen (3), and

c) the displacement of the light marks (43) is synchronized with the displacement of the marker device.

7. Process according to claim 6, characterized in that the two light marks (43) are distinguishable.

8. Process according to one of the claims 1 to 7, characterized in that

a) the colour values are stored in at least one image repeat memory (7 ; 8), and

b) are cyclically read out of the image repeat memory for display of the colour image on the image screen (3) of the colour monitor (2).

9. Process according to one of the claims 1 to 8, characterized in that

a) the colour values of the colour image which is to be retouched are stored simultaneously in a first image repeat memory (7) and in a second image repeat memory (8),

b) only the colour values of the second image repeat memory (8) are replaced by the corresponding substitution values, and

c) the colour values of the first image repeat memory (7) or of the second image repeat memory (8) are optionally switched through to the colour monitor (2) for display of the original colour image or of the retouched colour image.

10. Process according to one of the claims 1 to 9, characterized in that the copying retouching action is reversed by replacing the substitution values by the original colour values.

11. Process according to one of the claims 1 to 10, characterized in that the number of the simultaneously marked image dots within the two image sections (33, 34) is increased, by

a) in each case determining the image dot co-ordinates (x ; y) of several image dots lying around the image dot registered by means of the marker device within the one image section (first range of action) and

b) in each case also determining the image dot co-ordinates (x ; y) of the image dots of the other image section which are co-ordinated in respect of spacing (second range of action).

12. Process according to claim 11, characterized in that the form and size of the ranges of action (48 ; 48') are established by selection of the simultaneously determined image co-ordinates (x ; y).

13. Process according to claim 11 or 12, characterized in that the ranges of action (48 ; 48') are indicated by enlarged light marks (43).

14. Process according to one of the claims 1 to 13, characterized in that during the copying retouching operation, a change in scale is performed simultaneously by means of ranges of action (48 ; 48') of different size.

15. System for application of the process according to claim 1, comprising a storage medium for colour values, a colour monitor for displaying the colour image and a co-ordinate detection device (25) comprising a marker device (30) for registering image dot co-ordinates, characterized by

a) an original memory (7) for the unretouched colour values,

b) a copying memory (8) for the retouched colour values,

c) a memory control circuit (9) for calling up the memory addresses, which is connected to the original memory (7) and to the copying memory (8),

d) a calculator circuit (27) for producing the substitution values, which is connected to the original memory (7), to the copying memory (8) and to the memory control circuit (9), and by

e) a co-ordinate calculator (26) for determining the image dot co-ordinates (x ; y) of the two image sections from the image dot co-ordinates registered by means of the marker device (30), which is in communication with the memory control circuit (9), with the calculator circuit (27) and with the co-ordinate detection device (25).

16. System according to claim 15, characterized in that multiplexers (14 ; 15 ; 16 ; 17) are provided, through which the original memory (7) and the copying memory (8) may optionally be connected to the colour monitor (2).

17. System according to claim 15 or 16, characterized in that the co-ordinate calculator (26) comprises the following structural assemblies :

a) a comparator stage (53) supplied with the image dot co-ordinates (x ; y) detected,

b) an address counter (55) controlled by the comparator stage (53) for cyclic addressing of co-ordinate values,

c) a calculator stage (57) connected to the address counter (55), for calling up auxiliary co-ordinates ($x_H$ ; $y_H$),

d) a first adding stage (54) for producing the image dot co-ordinates ($x_S$ ; $y_S$) of the one image section, which is connected to the comparator stage (53) and to the calculator stage (57),

e) a distance calculator (62) supplied with the detected image dot co-ordinates of the read dot and of the write dot, for determining and storing the distance (D) between the read dot and the write dot,

f) a second adding stage (63) which is supplied with the image dot co-ordinates detected and the distance co-ordinates ($x_D$ ; $y_D$), and

g) a third adding stage (61) for establishing the image dot co-ordinates ($x_L$, $y_L$) of the other image section, which is in communication with the calculator stage (57) and the second adding stage (63).

**Revendications**

1. Procédé pour la retouche avec copie lors de la reproduction électronique d'images en couleur, selon lequel on numérise les signaux de couleur obtenus par la détection des points-image, trichromes, du modèle, et enregistrement point par point des grandeurs de couleur, numériques des différentes composantes de couleur dans un support de mémoire, et selon lequel les coordonnées des points-image sont saisies à l'aide d'un dispositif de marquage (30) d'un appareil de saisie de coordonnées (25) notamment à l'aide d'un crayon à coordonnées, qui assure l'adressage des grandeurs de couleur correspondantes dans le support de mémoire, caractérisé en ce que :

a) à l'intérieur d'une première plage d'image (33) de l'image en couleur dans laquelle on veut prendre une information d'image, on assure le marquage d'un premier point-image ($L_1$) (point de lecture) et à l'intérieur d'une seconde zone d'image (34) dans laquelle on veut copier l'information d'image, on repère un second point-image ($S_1$) (point d'inscription) et on saisit les coordonnées des points-image (x ; y) à l'aide du dispositif de marquage (25),

b) à partir des coordonnées de points-image (x ; y) saisies, on détermine la distance (D) entre le point de lecture (L₁) et le point d'inscription (S₁) et on fixe cette distance,

c) lors de la détection des coordonnées (x ; y) des points-image se trouvant à l'intérieur de la zone d'image à l'aide du dispositif de marquage (25), on détermine en même temps les coordonnées (x ; y) de ceux des points-image qui se trouvent localement associés à l'intérieur de l'autre zone d'image, qui sont à la distance fixée (D) entre le point de lecture (L₁) et le point d'écriture (S₁) pour les points-image respectivement saisis,

d) pour chaque point-image saisi de la seconde zone d'image (34), on détermine pour l'une des composantes de couleur une grandeur de substitution à partir des grandeurs de couleur des points-image associés localement de la première zone d'image (33), et

e) on remplace les grandeurs de couleur des composantes de couleur correspondantes des points-image saisis pour copier de façon précise les points-image des informations d'image par des grandeurs de substitution correspondant ponctuellement.

2. Procédé selon la revendication 1, caractérisé en ce qu'on détermine les grandeurs de substitution pour une composante de couleur à partir des grandeurs de couleur correspondantes des mêmes composantes de couleur.

3. Procédé selon la revendication 1, caractérisé en ce qu'on détermine les grandeurs de substitution d'une composante de couleur à partir des grandeurs de couleur correspondantes d'une autre composante de couleur.

4. Procédé selon la revendication 1, caractérisé en ce qu'on détermine en outre les grandeurs de substitution à partir des grandeurs de couleur initiales des points-image saisis.

5. Procédé selon les revendications 1 et 4, caractérisé en ce qu'on détermine les grandeurs de substitution par une addition pondérée des grandeurs de couleur correspondantes.

6. Procédé selon l'une des revendications 1 à 5, caractérisé en ce que :

a) on représente l'image en couleur pour le contrôle visuel sur l'écran-image (3) d'un moniteur-couleur (2),

b) on insère dans l'écran-image (3) deux repères lumineux (43) à distance fixe (D) et,

c) on synchronise le mouvement des repères lumineux (43) et le mouvement du dispositif de marquage.

7. Procédé selon la revendication 6, caractérisé en ce que les deux repères lumineux (43) sont différents l'un de l'autre.

8. Procédé selon l'une des revendications 1 à 7, caractérisé en ce que :

a) les grandeurs de couleur sont enregistrées dans au moins une mémoire de récupération d'image (7 ; 8) et,

b) pour représenter l'image en couleur sur l'écran-couleur (3) du moniteur-couleur (2), on effectue la lecture cyclique dans la mémoire de répétition d'image.

9. Procédé selon l'une des revendications 1 à 8, caractérisé en ce que :

a) les grandeurs de couleur de l'image en couleur à retoucher sont enregistrées en même temps dans une première mémoire de répétition d'image (7) et dans une seconde mémoire de répétition d'image (8),

b) seules les grandeurs de couleur de la seconde mémoire de répétition d'image (8) sont remplacées par des grandeurs de substitution correspondantes, et

c) pour représenter l'image en couleur originale ou l'image en couleur retouchée, on commande sélectivement les grandeurs de couleur de la première mémoire de répétition d'image (7) ou de la seconde mémoire de répétition d'image (8) pour le moniteur-couleur (2).

10. Procédé selon l'une des revendications 1 à 9, caractérisé en ce qu'on permet de revenir sur la retouche à la copie en remplaçant de nouveau les grandeurs de substitution par les grandeurs de couleur d'origine.

11. Procédé selon l'une des revendications 1 à 10, caractérisé en ce que le nombre des points-image repérés simultanément dans les deux zones d'image (32, 34) est augmenté en ce que :

a) on détermine respectivement, simultanément les coordonnées de points-image (x ; y) de plusieurs points-image saisis à l'aide du dispositif de marquage à l'intérieur de la plage-image (première zone d'action) et,

b) on détermine en même temps également les coordonnées (x ; y) des points-image associés sur le plan de la distance pour la première zone d'image (seconde zone d'action).

12. Procédé selon la revendication 11, caractérisé par le choix des coordonnées de points-image (x ; y) déterminées simultanément par la forme et les dimensions de la zone d'action (48, 48′).

13. Procédé selon les revendications 11 et 12, caractérisé en ce que les zones actives (48, 48′) sont mises en œuvre par des repères lumineux (43) agrandis.

14. Procédé selon l'une des revendications 1 à 13, caractérisé en ce que pour la retouche avec copie, on effectue en même temps une modification d'échelle par des zones actives de dimensions différentes (48 ; 48′).

15. Installation pour la mise en œuvre du procédé selon la revendication 1, composée d'un support de mémoire pour les grandeurs de couleur, d'un moniteur-couleur pour représenter l'image-couleur et d'une installation de saisie de coordonnées (25) avec un dispositif de repérage (30) pour saisir les coordonnées des points-image, caractérisée par :

a) une mémoire originale (7) pour les grandeurs de couleur non retouchées,

b) une mémoire de copie (8) pour les grandeurs de couleur retouchées,

c) un dispositif de commande de mémoire (9) pour appeler les adresses de mémoire, mécanisme relié à la mémoire originale (7) et à la mémoire de copie (8),

d) un circuit de calcul (27) pour former les grandeurs de substitution et qui sont reliées à la mémoire originale (7), à la mémoire de copie (8) et au dispositif de commande de mémoire (9), et par,

e) un calculateur de coordonnées (26) pour déterminer les coordonnées (x ; y) des images des deux zones d'image à partir des coordonnées de points-image saisies à l'aide du dispositif de marquage (30) et coopérant avec le dispositif de commande de mémoire (9), le circuit de calcul (27) et l'installation de saisie de coordonnées (25).

16. Installation selon la revendication 15, caractérisée par des multiplexeurs (14, 15, 16, 17) qui peuvent relier la mémoire originale (7) et la mémoire de copie (8) sélectivement au moniteur-couleur (2).

17. Installation selon les revendications 15 ou 16, caractérisée en ce que le calculateur de coordonnées (26) comporte les groupes constructifs suivants :

a) un étage de comparaison (53) recevant les coordonnées de points-image (x ; y) saisies,

b) un compteur d'adresses (55) commandé par l'étage de comparaison (53) pour l'appel cyclique des grandeurs de coordonnées,

c) un étage de calcul (57) relié au compteur d'adresses (55) pour appeler les coordonnées auxiliaires ($x_H$ ; $y_H$),

d) un premier étage d'addition (54) pour former les coordonnées de points-image ($x_S$ ; $y_S$) de la première zone d'image et qui est relié à l'étage de comparaison (53) et à l'étage de calcul (57),

e) un calculateur de distance (62) recevant les coordonnées saisies du point-image correspondant au point de lecture et au point d'écriture pour déterminer et mettre en mémoire la distance (D) entre le point de lecture et le point d'écriture,

f) un second étage d'addition (63) qui reçoit les coordonnées saisies du point-image et les coordonnées des distances ($x_D$, $y_D$) et,

g) un troisième étage d'addition (61) pour former les coordonnées du point-image ($x_L$, $y_L$) de l'autre zone d'image et qui est relié à l'étage de calcul (57) et au second étage-additionneur (63).

Fig. 1

Fig. 2a

Fig. 2b

Fig. 2c

Fig. 3

Fig. 4

2